# EUROPÄISCHE PATENTSCHRIFT

(11) **EP 1 206 653 B1**
(45) Veröffentlichungstag und Bekanntmachung des Hinweises auf die Patenterteilung: **20.07.2005**
(21) Anmeldenummer: 00962365.3
(22) Anmeldetag: 23.08.2000
(51) Int. Cl.: F16F 9/05

(54) **FEDER-DÄMPFERSYSTEM MIT DIFFERENZROLLBALG**
SPRING-AND-SHOCK ABSORBER SYSTEM WITH DIFFERENTIAL U-BELLOWS
SYSTEME AMORTISSEUR A RESSORT ET SOUFFLET A RAYONS DIFFERENTIELS

(30) Priorität: 24.08.1999 DE 19939969; 19.05.2000 DE 10024571
(43) Veröffentlichungstag der Anmeldung: 22.05.2002
(73) Patentinhaber: DaimlerChrysler AG, 70567 Stuttgart (DE); ContiTech Luftfedersysteme GmbH, 30165 Hannover (DE)
(72) Erfinder: ACKER, Bernd, 73733 Esslingen (DE); GÖNNHEIMER, Peter, 71384 Weinstadt (DE); KLANDER, Hans-Peter, 70329 Stuttgart (DE); MELJNIKOV, Darko, 70771 Leinfelden-Echterdingen (DE); RÖMER, Matthias, 71155 Altdorf (DE); RÖSS, Karl-Heinz, 73061 Ebersbach (DE); RUTZ, Rüdiger, 73257 Köngen (DE); WINKLER, Martin, 71409 Schwaikheim (DE); BANK, Christoph, 31275 Lehrte (DE); CERNY, Paul, 30974 Wennigsen (DE); THUROW, Gehard, 30823 Garbsen (DE)
(86) Internationale Anmeldenummer: PCT/EP2000/008233
(87) Internationale Veröffentlichungsnummer: WO 2001/014765

(56) Entgegenhaltungen:
- DE-A- 2 907 926
- DE-A- 19 546 645
- GB-A- 2 318 851
- US-A- 4 493 481
- US-A- 5 570 866
- "PRODUCING A SMOOTHER CART RIDE OVER THE COBBLES" DESIGN ENGINEERING,GB,MORGAN-GRAMPIAN LTD. LONDON, 1994, Seite 25 XP000420600 ISSN: 0308-8448

## Beschreibung

Die Erfindung betrifft ein kombiniertes Feder-Dämpfersystem zur Abstützung von Radaufhängungen oder Achsen an einem Fahrzeugaufbau mit einem zwischen einer radtragenden oder radführenden Anbindung und einer fahrzeugaufbauseitigen Anbindung angeordneten Schlauchrollbalg, der zwischen einer Außenglocke und einem Abrollkolben angeordnet ist, wobei zum einen die Außenglocke und der Abrollkolben jeweils über der Höhe des entsprechenden Bauteils zumindest bereichsweise variierende Durchmesser der den Schlauchrollbalg kontaktierenden Wandungen hat und zum anderen beide Enden des Schlauchrollbalgs am Abrollkolben an Abschnitten unterschiedlichen Durchmessers abdichtend befestigt sind, wobei der untere Befestigungsabschnitt einen größeren Durchmesser als der obere Befestigungsabschnitt hat.

Aus der US 4,518,154 ist ein derartiges pneumatisches Federungssystem für Fahrzeuge bekannt. Die Außenglocke und der mehrteilige Abrollkolben schließen einen einteiligen Differenzrollbalg ein. Aufgrund des niedrigen Gasdrucks und der Verwendung eines Differenzrollbalgs benötigt diese Konstruktion einen überdurchschnittlich großvolumigen Bauraum.

Ferner ist aus der DE 297 02 927 C1 ein Feder-Dämpfersystem bekannt, das aus einem Verdränger ohne Balg, einem Hydrospeicher und einer diese Teile verbindenden Hydraulikleitung besteht. In der Hydraulikleitung ist ein mechanisches Drosselventil angeordnet. Der Verdränger verbindet, wie bei einem hydropneumatischen Federungssystem bekannt, die Fahrzeugradaufhängung mit dem Fahrzeugaufbau. Das System ist mit einer hydraulischen Flüssigkeit befüllt. Letztere wird beim Einfedern eines Fahrzeugrades durch das Drosselventil in einen Hydrospeicher verdrängt. Der Strömungswiderstand des Drosselventils erzeugt eine dämpfende Kraft, während die Kompression des Gasvolumens im Hydrospeicher eine federnde Kraft bewirkt. Bei dem hier vorgestellten Verdrängerprinzip taucht ein Verdrängerkolben in einen Verdrängerzylinder ein. Beide Teile bewegen sich in einer Führungs- und Dichtfuge reibungsbehaftet gegeneinander. Die Reibung beeinträchtigt die Ansprechzeit des Feder-Dämpfersystems, so daß sich bei einem Einsatz in einem Fahrzeug kein optimales Abrollverhalten der mit diesem System abgestützten Räder ergibt.

Die US-A-4 493 481 zeigt eine pneumatisch Feder für Kraftfahrzeuge mit geschlossenem Federvolumen und zwei unterschiedlich großen, entgegengesetzt druckbeaufschlagten, voneinander abgewandten wirksamen und in ihrer Größe federwegabhängige veränderlichen Federflächen, die koaxial gegeneinander abgestützt sind.

Der Schlauchrollbalg ist an beiden Enden mit gleichen Durchmessern am Abrollkolben befestigt und ist als einstückiger Schlauchrollbalg ausgebildet.

In der GB-A-2 318 851 ist ein Mehrbalgfedersystem mit über Leitungen verbundenen Hydrospeichern beschrieben. Zwei getrennte, in der Größe unterschiedliche in sich geschlossene Bälge verfügen je über einen eigenen Hydrospeicher. Es sind zwei hydraulisch voneinander losgelöste Systeme, wobei jeder Balg in Federrichtung gesehen, aufbauseitig und auf radführender Seite die gleichartige, nichtzylindrische Kolbenflächen aufweist. Die Bälge sind im wesentlichen frei liegende Bälge, wogegen bei den erfindungsgemäßen Ausführungsbeispielen die Bälge über nahezu den gesamten Bereich zwischen einer Außenglocke und einem Abrollkolben eingespannt sind. Zwischen den Bälgen ist ein mechanisches, von den Bälgen unabhängiges Übertragungsglied vorhanden.

Aus zahlreichen Publikationen und aus der Praxis sind diverse Kraftfahrzeug-Luftfedern bekannt. Sie bestehen im wesentlichen aus einem Rollbalg, der ein Luftvolumen umschließt und an seinem einen Ende von einer chassisfesten Abdeckplatte und an seinem anderen Ende von einem radseitigen Abrollkolben begrenzt wird. Solche herkömmlichen Luftfedern weisen keine Kippstabilität auf, so daß zusätzliche Maßnahmen zur Längs- und Querführung erforderlich sind.

Der vorliegenden Erfindung liegt das Problem zugrunde, ein kombiniertes Feder-Dämpfersystem zu entwickeln, das einen auf einem Schlauchrollbalg basierenden, reibungsarmen Verdränger in schlanker Bauweise und mit großer Quersteifigkeit beinhaltet.
Weiter besteht die Aufgabe der Erfindung darin, eine druckmittelbeaufschlagbare Federungsvorrichtung zu schaffen, die im Federungsverhalten und in der Federhöhe regelbar ist, und bei der auf externe Längs- und Querlenker gänzlich oder zumindest weitestgehend verzichtet werden kann.

Das Problem wird mit den Merkmalen der Hauptansprüche 1 und 8 gelöst. Dazu wird ein Schlauchrollbalg verwendet, der als Differenzrollbalg ausgebildet ist. Die Wandungen der Abschnitte unterschiedlichen Durchmessers des Abrollkolbens sind im Hubbereich zylindrisch ausgebildet. Der Balgraum ist mit einem Fluid befüllt und kommuniziert mit einem fahrwerk- und/oder fahrzeugseitig gelagerten Hydrospeicher.

Die Art des Verdrängerbalgs, die Art der Anbindung am Fahrwerk und am Fahrzeugaufbau und das Befüllen des Balgraumes mit einem über ein Gas vorgespanntes Fluid ermöglichen einen schlanken Verdränger ohne mechanische, reibungsbehaftete Längsführung. Eine separate Längsführung ist überflüssig, da der Druck im Verdrängerbalg die relativ zueinander bewegten Federbeinteile über die beiden Balgmenisken zentriert und stabilisiert.

Bei einem Be- oder Entlasten des Verdrängers strömt zwischen dem Verdränger und dem Hydrospeicher über eine Querschnittsverengung in Form einer hydraulischen Leitung oder eines Durchbruchs eine Hydraulikflüssigkeit hin und her. Die Gestaltung der Leitung bzw. des Durchbruchs und die Beschaffenheit der dort angeordneten Drosselstellen beeinflußt über die Größe und Form des Öffnungsquerschnittes die Systemdämpfung. Hierbei kann die jeweilige Drosselstelle entweder als Düse oder Blende ausgebildet oder mindestens ein Drosselrückschlagventil sein. Bei der Verwendung von Drosselrückschlagventilen wird im Leitungs- bzw. im Durchbruchsquerschnitt pro Strömungsrichtung jeweils mindestens ein Ventil angeordnet.

Das Gaspolster des Hydrospeichers bildet maßgeblich die Systemfederung.

Durch das Verwenden eines Schlauchrollbalgs in Form eines Differenzrollbalgs wird die mechanische Reibung des Gesamtsystems im wesentlichen auf die innere Reibung des Balg- und oder Membranmaterials reduziert. Dadurch zeigt das Feder-Dämpfersystem über den gesamten Feder- und Dämpferratenbereich ein nahezu ideales Ansprechverhalten. Die Außenglocke und/oder der Abrollkolben kann jeweils über Gelenke direkt - auch ohne ein Zwischenschalten von gummielastischen Elementen - am Fahrzeugaufbau bzw. am Fahrwerk befestigt werden. Das senkt u.a. das Bauteilgewicht, die Herstellungskosten, den Montageaufwand und die Wartungskosten.

Die beiden Abrollkolbenhälften nebst den beiden zugehörigen Differenzrollbalghälften der erfindungsgemäßen Federungsvorrichtung geben eine selbstzentrierende Führung zwischen Doppelabrollkolben und Außenglocke. Wegen des - verglichen mit herkömmlichen Luftfedern - relativ hohen Betriebsdruckes ist diese radiale Führung besonders stabil.

Andererseits wird wegen der gummielastischen Entkoppelung von Kolben und Außenglocke eine höherfrequente Schwingungsanregung weggefiltert. Die Gestalt der Federungsvorrichtung als Differenzrollbalgfeder ist langgestreckt, womit außer der sehr guten radialen (Seiten-) Führung auch eine gute Längsführung gegeben ist. Aus diesem Grunde kann auf separate Längs- und Querlenker weitgehend oder sogar gänzlich verzichtet werden.

Die Federkraft wird von der Differenz der wirksamen Krümmungsradien der beiden Rollbalghälften (Differenzrollbalghälften) bestimmt. Die Krümmungsradien der Rollbalghälften ergeben sich aus den Differenzen der Radien (bzw. Durchmesser) vom Außenglocke und den beiden Kolben (-Hälften). Ist die Differenz der jeweiligen Kolbenradien gering, so ist die Differenz der Krümmungsradien der Rollbalghälften ebenfalls gering. Dies hat zur Folge, daß mit hohem Betriebsdruck gearbeitet werden kann (bzw. muß), wie er bei aktiven Fahrwerksregelungen gefordert wird.

Die Differenz der wirksamen Rollbalg-Krümmungsradien kann statt mittels einer Differenz der Kolbenradien auch mittels einer Radien-Differenz der wirksamen Außenglocken-Abschnitte realisiert werden.

Die entgegengesetzt zueinander angeordneten Rollbalghälften werden einerseits an der Außenglocke und andererseits am Kolben mittels Spannringen mechanisch zuverlässig fest und pneumatisch/hydraulisch dicht eingeklemmt.

Das Befüllen der Feder und die Regelung, insbesondere die Einstellung der Federhöhe, aber auch eine Wankregelung, kann mittels einer geregelten Druckpumpe erfolgen, die an der Außenglocke befindlichen Rohrstutzen anzuschließen ist. Außerdem kann ein Speichervolumen angeschlossen werden.

Zur Aufnahme eines Stoßdämpfers ist der Kolben vorzugsweise hohlzylindrisch ausgebildet. Auf diese Weise kann auf einen separat angeordneten Stoßdämpfer verzichtet werden. Das spart sowohl zusätzlichen Bauraum als auch zusätzliche Montagearbeit. Der von dem Federmantel umhüllte Stoßdämpfer ist vor Straßenschmutz geschützt.

Das Federvolumen der Rollbalghälften kann wahlweise mit einem komprimierbaren Gas (vorzugsweise Luft) oder mit Hydraulikflüssigkeit gefüllt werden.

Weitere Einzelheiten der Erfindung ergeben sich aus den Unteransprüchen und der nachfolgenden Beschreibung zweier schematisch dargestellter Ausführungsformen:
- Figur 1:: Feder-Dämpfersystem mit einem Differenzrollbalg und externem Hydrospeicher;
- Figur 2:: Feder-Dämpfersystem mit einem integrierten Hydrospeicher;
- Figur 3:: Feder-Dämpfersystem mit einer komprimierbaren Gas- (vorzugsweise Luft) oder Hydraulikfüllung.

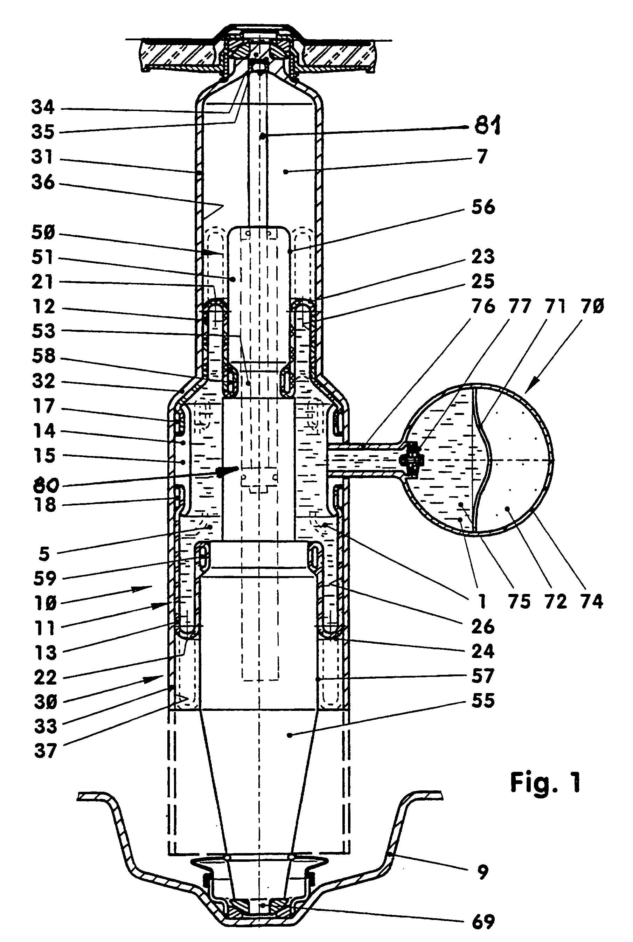

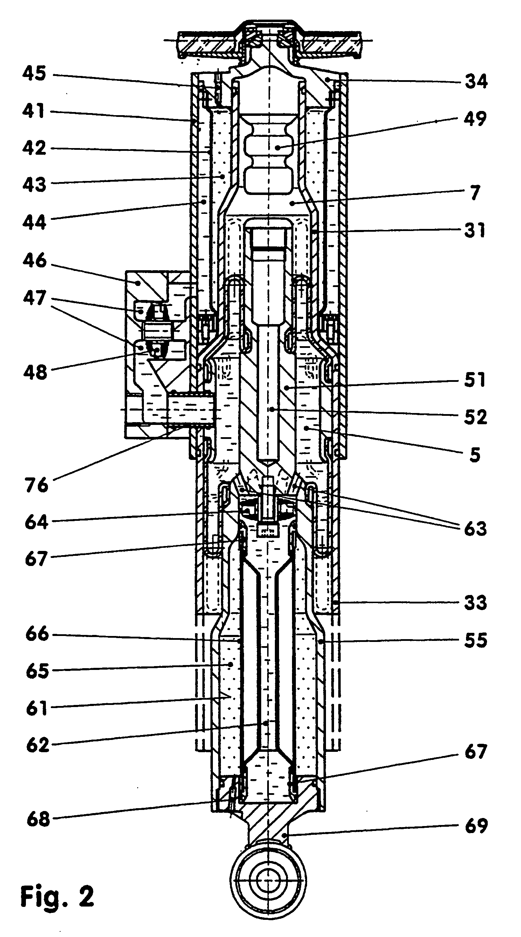

Die Figuren 1 und 2 zeigen jeweils ein kombiniertes Feder-Dämpfersystem, das einen Verdränger (10), einen Hydrospeicher (70, 44, 62) und eine zwischen diesen angeordnete flüssigkeitsführende Arbeitsleitung (76) mit einem integrierten Drosselventil (77, 48, 64) umfaßt.

Der Verdränger (10) besteht u.a. aus einer mehrstufigen Außenglocke (30), einem ebenfalls mehrstufigen Abrollkolben (50) und einem beide Teile verbindenden mehrteiligen Differenzrollbalg (11). Beim Ein- und Ausfedern bewegt sich der beispielsweise am Fahrwerk befestigte Abrollkolben (50) - zentrierend geführt durch den Differenzrollbalg (11) - auf- und ab. Die Außenwandung (23, 24) des Differenzrollbalgs (11) rollt hierbei an der Außenglocke (30) und am Abrollkolben (50) ab.

Die Außenglocke (30) ist ein Hohlkörper, der hier zwei zumindest bereichsweise zylindrische Abschnitte (31, 33) umfaßt, die mittels eines kegelstumpfmantelförmigen Übergangsstücks (32) miteinander verbunden sind. In Figur 1 sind die Abschnitte (31, 32) und das Übergangsstück (33) aus einem Teil gefertigt. Der obere Abschnitt (31) ist an seinem oberen Ende mit einem Boden (34) verschlossen. An den Boden (34) ist ein Adapter (35) zur gelenkigen Anbindung an den Fahrzeugaufbau angeformt. Der Innendurchmesser des oberen, zylindrischen Abschnitts (31) ist beispielsweise um ein Drittel kleiner als der Innendurchmesser des unteren, zylindrischen Abschnitts (33).

Die Abschnitte (31) und (33) können auch eine kegelstumpfförmige Innenkontur haben. In einem solchen Fall würde sich der obere Abschnitt (31) nach oben hin und der untere Abschnitt (33) nach unten hin verjüngen.

Auch der Abrollkolben (50) hat einen oberen (51) und einen unteren Abschnitt (55), wobei beide Abschnitte (51, 55) beispielsweise eine zylindrische Außenkontur (56, 57) haben. Der Außendurchmesser des oberen Abschnitts (51) ist kleiner als der Außendurchmesser des Abschnitts (55). Der Außendurchmesser des Abschnitts (51) beträgt beispielsweise ca. 60% vom Innendurchmesser des Außenglockenabschnitts (31). Die Durchmesserdifferenz ist im Ausführungsbeispiel so gewählt, daß jeweils die Spalte zwischen den einander gegenüberliegenden Abschnitten (31) und (51) in den Zonen, in denen sich die Menisken (21, 22) des Differenzrollbalgs (11) bewegen, annähernd gleich breit sind.

In Figur 1 verjüngt sich der untere Abschnitt (55) des Abrollkolbens (50). Die Verjüngung beginnt unterhalb der Zone, die mit vom Differenzrollbalg (11) kontaktiert werden kann. Das untere Ende des Abrollkolbens (50) endet in einem Adapter (69) zur gelenkigen Anbindung an das Fahrwerk (9).

Der zwischen dem Abrollkolben (50) und der Außenglocke (30) angeordnete Differenzrollbalg (11) besteht u.a. aus zwei ggf. identischen schlauchartigen Rollbalghälften (12 ,13). Die Rollbalghälften (12, 13) sind koaxial zueinander ausgerichtet und über eine annähernd rohrförmige Verbindungsmuffe (14) gas- und flüssigkeitsdicht aneinander befestigt. Die Verbindungsmuffe (14) ist ein kurzes Rohr, auf das von beiden Seiten her je eine Rollbalghälfte (12, 13) aufgeschoben ist. Der jeweils aufgeschobene Abschnitt der entsprechenden Rollbalghälften (12, 13) ist auf der Verbindungsmuffe (14) mit Hilfe je eines Spannrings (17, 18) z.B. kraft- und formschlüssig rutschfest fixiert. In den Figuren 1 und 2 hat die Verbindungsmuffe zwischen den Spannringen (17, 18) einen Rohrabschnitt (15), der nicht von den Rollbalghälften (12, 13) überdeckt ist. Dieser Rohrabschnitt (15) hat einen Außendurchmesser, der nur geringfügig kleiner ist als der Innendurchmesser des unteren Abschnitts (33) der Außenglocke (30).

Zur Befestigung des Differenzrollbalgs (11) am Abrollkolben (50) wird das untere Ende des an den Schlauchenden offenen Differenzrollbalgs (11) mit der Innenwandung (26) auf das obere Ende des unteren Abrollkolbenabschnitts (55) aufgeschoben und mittels eines Spannrings (59) festgeklemmt. Der Abschnitt (55) hat dort einen um die Summe aus den Wandstärken des Spannrings (58) und des Balgs (11) verringerten Radius.

In einem zweiten Schritt wird der Abrollkolben (50) in den Differenzrollbalg (11) hineingeschoben, bis das obere Rollbalgende die Mitte des oberen Abschnittes (51) erreicht. Während des Einschiebens stülpt sich der untere Bereich des Rollbalgs (11) über den Spannring (59), so daß sich die Außenwandung (24) des Balgs (11) am Abrollkolbenabschnitt (55) anlegt.

In der Mitte des oberen Abschnittes (51) befindet sich eine Eindrehung (53), in der die Innenwandung (25) vom oberen Ende des Balgs (11) mittels eines Spannrings (58) fixiert wird. Die Tiefe der Eindrehung (53) ist so gewählt, daß die Außenkontur des montierten Spannrings (58) den annähernd gleichen Durchmesser aufweist wie der Abschnitt (51) in der Zone, in der im montierten Zustand die Außenwandung (24) des Balgs (11) anliegt. Unterhalb der Eindrehung (53) hat in den Ausführungsbeispielen der Abschnitt (51) einen Durchmesser, der gegenüber dem Durchmesser des Abschnitts (51) oberhalb der Eindrehung (53) um ca. die doppelte Balgwandstärke vergrößert ist.

Nach der Befestigung des Differenzrollbalgs (11) am Abrollkolben (50) werden beide Teile in die Außenglocke (30) eingeschoben, bis sich die Verbindungsmuffe (14) mit der Rollbalghälfte (12) an das Übergangsstück (32) anlegt. Zum endgültigen Positionieren des Differenzrollbalgs (11) wird nun der Abrollkolben (50) in eine Mittellage innerhalb der Außenglocke (30) zurückgezogen. Hierbei stülpt sich die Außenwandung (23) der Rollbalghälfte (12) unter Ausbildung eines nach oben orientierten Meniskus (21) über dem Spannring (58) und die Außenwand (56) des Abschnitts (51).

In der Folge rollen bei jeder betriebsbedingten Relativbewegung zwischen den Teilen (30) und (50) die Außenwandungen (23, 24) des Differenzrollbalgs (11) an den Außenwänden (56, 57) und den Innenwänden (36, 37) ab. Da sich bei den Ausführungsbeispielen die Menisken (21, 22) des Differenzrollbalgs (11) in schmalen Ringräumen mit zylindrischen Wänden bewegen, sind die Zentrierkräfte und die Quersteifigkeit über den gesamten Hub des Feder-Dämpferbeins nahezu konstant.

Die Menisken (21, 22) bewegen sich also im gesamten Hubbereich zwischen dem Abrollkolben (50) und der Außenglocke (30) in beispielsweise zylindrischen Zonen. Hierbei realisiert der Meniskus (21) eine Kolbenfläche, die beispielsweise um zwei Drittel kleiner ist als die wirksame Kolbenfläche am Abschnitt (55).

Der nutzbare Gesamthub des Federbeins entspricht nach Figur 1 ca. dem Innendurchmesser der Außenglocke (30) im Bereich des Abschnitts (33).

Die Längen der einzelnen Rollbalghälften (12) bzw. (13) entsprechen beispielsweise dem Eineinhalb- bis Zweifachen des Balgdurchmessers im Bereich des Abschnitts (33).

Der von dem Differenzrollbalg (11) umschlossene Raum (5) ist mit einer inkompressiblen Flüssigkeit (1) befüllt, die nach Figur 1 über ein in einem Hydrospeicher (70) eingeschlossenes Gaspolster unter Druck steht. Der Hydrospeicher (70) ist beispielsweise als Blasen- oder Membranspeicher ausgebildet. Das durch die Blase oder Membrane (71) abgeteilte Gaspolster (72) bildet die Federung des Feder-Dämpfersystems.

Der Hydrospeicher (70), der nur beispielhaft neben der Außenglocke (30) angeordnet dargestellt ist, ist über eine Arbeitsleitung (76) mit dem Balgraum (5) verbunden. Dazu ist die Arbeitsleitung (76) durch den Außenglockenabschnitt (33) hindurchgeführt und an der Verbindungsmuffe (14) angeschlossen. Die Arbeitsleitung (76) selbst positioniert hierdurch die Verbindungsmuffe (14) formschlüssig im Außenglockenabschnitt (33).

Im Gehäuse (74) des Hydrospeichers (70) befinden sich am Übergang zur Arbeitsleitung (76) zwei einander entgegengesetzt wirkende Druckstufenventile in Form von Federplattenventilen (77). Jeweils ein Ventil (77) öffnet in eine Strömungsrichtung. Hierbei kann die Drosselwirkung des einzelnen Drosselrückschlagventils (77) ggf. mittels eines steuer- oder regelbaren Antriebs verstellbar ausgeführt werden.

An die Arbeitsleitung (76) kann ggf. eine sperrbare Zuleitung angeschlossen sein. Über eine derartige Zuleitung würde - bei einer Verwendung als aktives Feder-Dämpfersystem bzw. als Niveauregulierung - dem Verdränger Flüssigkeit zugeführt oder entnommen werden.
Durch die Zu- und Abfuhr einer bestimmten Flüssigkeitsmenge können in gewünschter Weise Zusatzkräfte realisiert werden. Die Auf- oder Wegnahme dieser Zusatzmengen verändert im Gesamtsystem die Dämpfer- und die Federkräfte.

Das im Feder-Dämpfersystem verwendete Fluid (1) ist beispielsweise eine Lösung aus Wasser und Alkohol. Für diese Lösung eignen sich alle Alkohole, die bei Raumtemperatur in einem beliebigen Verhältnis mit Wasser mischbar sind. Beispielsweise wird eine Wasser-Äthanol-Lösung oder eine Wasser-Glykol-Lösung verwendet. Eine übliche Wasser-Glykol-Lösung, wie sie auch als frostgeschützte Kühlflüssigkeit in Verbrennungsmotoren verwendet wird, hat z.B. einen Ethylenglykolanteil von 33 bis 50%. Bei der fünfzigprozentigen Lösung ist ein Betrieb des Feder-Dämpfersystems bis zu einer Kälte von -35° Celsius möglich. Diese Lösung greift zudem die üblichen Elastomerwerkstoffe nicht an. Auch die Gummiquellung liegt in der Größenordnung der Quellung in reinem Wasser.

Figur 2 stellt ein Feder-Dämpfersystem mit zwei raumsparend integrierten Hydrospeichern dar. Hierzu ist zumindest der untere Abschnitt (55) des Abrollkolbens (50) als Hohlkörper bzw. gestufte Sacklochbohrung (61) mit mindestens zwei voneinander getrennten Hohlräumen (62) und (65) ausgeführt. Die Hohlräume sind dazu beispielsweise koaxial zueinander angeordnet.

Der äußere Hohlraum (65) ist ein Ringraum, der von der Innenwand des Abrollkolbens (50) und einer lamellierten Schlauchmembrane (66) gebildet wird. Die Schlauchmembrane (66) ist dazu an dem oberen Ende mittels eines Ringadapters (67) im Bereich des Bodens der Sacklochbohrung (61) und mit seinem unteren Ende mit einem vergleichbaren Ringadapter (67) in einem in den Abrollkolben (50) eingeschraubten Boden fixiert. Der Ringraum (65) wird über ein in diesem Boden sitzenden Ventil (68) mit Gas befüllt.

Der zentrale Hohlraum (62) steht hydraulisch über Bohrungen (63) und ein doppelt wirkendes Federplattenventil (64) mit dem Balgraum (5) in Verbindung.

Der zweite Hydrospeicher ist im Bereich des oberen Außenglockenabschnitts (31) angeordnet. Hierzu ist dort die Außenglocke (30) mit einem z.B. rohrförmigen Gehäuse (41) umgeben. Zwischen diesem Gehäuse (41) und der Außenkontur der Außenglocke (30) liegt ein Gesamtringraum, der durch eine schlauchartige Membrane (42) in einen inneren (43) und äußeren Ringraum (44) geteilt ist. Der innere Ringraum (43) ist mit Gas gefüllt, vgl. Ventil (45), während der äußere Ringraum (44), vergleichbar mit dem Fluidraum (75) aus Figur 1, mit dem Balgraum (5) über mindestens ein Federplattenventil (48) kommuniziert. Das oder die Federplattenventile (48) sitzen im Ausführungsbeispiel nach Figur 2 in einem Aufsatzgehäuse (46). Der Innenraum (47) des Gehäuses (46) ist über die Arbeitsleitung (76) an dem Balgraum (5) angeschlossen.

Ggf. können die Räume (44) und (62) auch direkt miteinander hydraulisch verbunden sein und nur über ein doppelt wirkendes Federplattenventil mit dem Balgraum (5) kommunizieren.

In Unterschied zu Figur 1 befindet sich im entlüfteten Rückraum (7) ein Gummidämpferelement (49) als elastischer Anschlag. Auch ist der obere Abschnitt (51) des Abrollkolbens (50) zur Verringerung der ungefederten Masse mit einer verschlossenen Bohrung (52) ausgestattet.

Zwischen dem Fahrwerk und dem Fahrzeugaufbau kann das Federbein auch mit einer am Fahrwerk angelenkten Außenglocke angeordnet werden. Dazu müssen zumindest die Konturen des Abrollkolbens und der Außenglocke an die neue Orientierung der Ausfederrichtung angepaßt werden.

Alternativ zu der bisher beschriebenen Ausführungsform ist ein Feder-Dämpfersystem denkbar, bei dem das im System verwendete Fluid (1) eine magnetorheologische Flüssigkeit ist. Wird nun an der hydraulischen Arbeitsleitung (76) beispielsweise ein kurzer ringförmiger Abschnitt von einer stromerregten Magnetspule umschlossen, so stellt die erregte Magnetspule in Kombination mit dem Fluid (1) eine variable Drosselstelle dar. Mit einer zunehmenden Bestromung der Spule nimmt die Fließgeschwindigkeit durch eine Zunahme der scheinbaren bzw. dynamischen Viskosität in der Arbeitsleitung (76) ab, wodurch sich u.a. das Dämpfungsverhalten des Gesamtsystems gezielt verändern läßt.

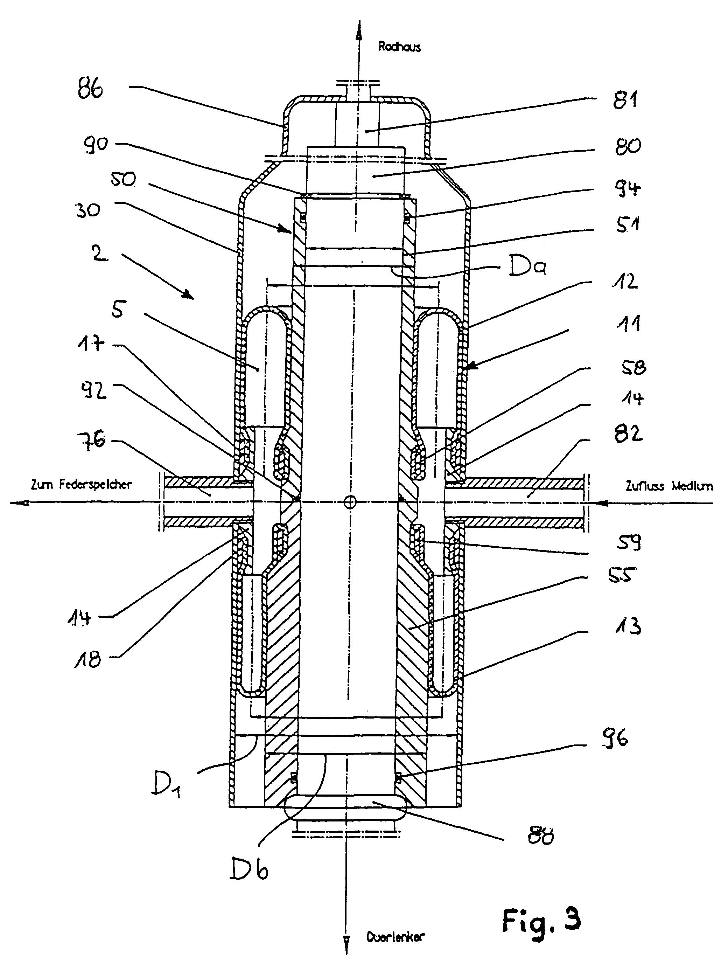

Die in Figur 3 dargestellte Federungsvorrichtung 2 besteht aus einer Außenglocke 30, welche zylindrisch ausgebildet ist, und einem innenliegenden Kolben 50. Der koaxial zur Außenglocke 30 angeordnete Kolben 50 ist als Doppelabrollkolben ausgebildet. Der erste (obere) Teilkolben 51 des Doppelabrollkolbens 50 hat den Außendurchmesser Da, der zweite (untere) Teilkolben 55 hat den Außendurchmesser Db. Der aus den Teilkolben 51 und 55 bestehende Kolben 50 ist innerhalb der den Innendurchmesser D₁ aufweisenden Außenglocke 30 axial beweglich.

Die lichten Weiten D₁ - Da bzw. D₁ - Db zwischen den Teilkolben 51 und 55 und der Außenglocke 30 werden von zwei gegeneinander angeordneten Rollbalghälften 12 und 13 ausgefüllt. Die Rollbalghälften 12, 13 bilden einen Differenzrollbalg 11 und bestehen aus elastomerem, mit Gewebeeinlage verstärktem Material. Der eine (erste) Rollbalg 12 ist dem einen Teilkolben 51 zugeordnet, während der andere (zweite) Rollbalg 13 den anderen Teilkolben 55 umhüllt. Die Enden der Rollbalghälften 12, 13 sind einerseits am Kolben 50 mittels Spannringen 58, 59 andererseits an der Außenglocke 30 mittels eines Außenringes 14 nebst Spannringen 17, 18 druckdicht eingespannt. Der Außenring weist zwei Rohrstutzen 76, 82 zum Anschluß einer Pumpe und eines Federspeichers (nicht dargestellt) auf; über die Rohrstutzen 76, 82 ist die Federungsvorrichtung 2 regelbar.

Der in der Zeichnung dargestellte Kolben 50 ist hohlzylindrisch ausgebildet. Sein Inneres enthält einen Stoßdämpfer 80, dessen Rohr mittels eines Sprengringes 90 am oberen Kolbenende befestigt ist. Die Dichtigkeit zwischen Stoßdämpfer (Rohr) 80 und Kolben 50 wird mittels dreier O-Ringe 92, 94, 96 realisiert. Die Stoßdämpferstange 81 ist an einer auf der Außenglocke 30 befindlichen Abdeckplatte 86 befestigt.

Wird der radseitig befestigte Kolben 50 axial relativ zur chassisseitigen Außenglocke 30 bewegt, so rollen die beiden zwischen Kolben 50 und Außenglocke 30 befindlichen Rollbalghälften 12, 13 einerseits auf der Außenfläche des Kolbens 50 und andererseits auf der Innenfläche der Außenglocke 30 ab. Die sich bei Druckbeaufschlagung der Rollbalghälften 12, 13 mit Druckluft bzw. Hydraulikflüssigkeit ergebende axiale Kraft ist der Differenz der wirksamen Rollbalg-Krümmungsradien proportional.

### Bezugszeichenliste

- 1: Fluid, Wasser-Glykol-Lösung
- 2: Federungsvorrichtung
- 5: Balgraum
- 7: Rückraum
- 9: Fahrwerk

- 10: Verdränger
- 11: Schlauchrollbalg, Differenzrollbalg, Balg
- 12, 13: Rollbalghälften, Balgteile
- 14: Verbindungsmuffe
- 15: Rohrabschnitt
- 17, 18: Spannringe

- 21, 22: Menisken
- 23, 24: Außenwandungen
- 25, 26: Innenwandungen

- 30: Außenglocke
- 31: oberer Abschnitt
- 32: Übergangsstück
- 33: unterer Abschnitt
- 34: Boden
- 35: Adapter
- 36, 37: Innenwände

- 41: Gehäuse, rohrförmig
- 42: Membrane, schlauchartig
- 43: innerer Ringraum
- 44: äußerer Ringraum
- 45: Ventil
- 46: Aufsatzgehäuse
- 47: Gehäuseinnenraum
- 48: Federplattenventil
- 49: Gummidämpferelement

- 50: Abrollkolben, Kolben
- 51: oberer Abschnitt
- 52: Bohrung
- 53: Eindrehung
- 55: unterer Abschnitt
- 56, 57: Außenwände
- 58, 59: Spannringe

- 61: Sacklochbohrung
- 62: innerer Hohlraum, zentral
- 63: Bohrungen
- 64: Federplattenventil
- 65: äußerer Hohlraum, Ringraum
- 66: Schlauchmembrane
- 67: Ringadapter
- 68: Ventil
- 69: Adapter, Adapter mit Schwenkgelenk

- 70: Hydrospeicher
- 71: Membrane
- 72: Gaspolster
- 74: Gehäuse
- 75: Fluidraum

- 76: Arbeitsleitung, Rohrstutzen
- 77: Drosselventile, Druckstufenventile

- 80: Stoßdämpfer
- 81: Stoßdämpferstange
- 82: Rohrstutzen, Anschluß Pumpe
- 86: Deckel, Mantelzylinder
- 88: Aufweitung des Stoßdämpferrohrs
- 90: Sprengring
- 92, 94, 96: O-Ring
D₁ Innendurchmesser Außenglocke
Dₐ Außendurchmesser erster Kolben
D_{b} Außendurchmesser zweiter Kolben

## Patentansprüche

1. Kombiniertes Feder-Dämpfersystem zur Abstützung von Radaufhängungen oder Achsen an einem Fahrzeugaufbau mit einem zwischen einer radtragenden oder radführenden Anbindung und einer fahrzeugaufbauseitigen Anbindung angeordneten Schlauchrollbalg, der zwischen einer Außenglocke (30) und einem Abrollkolben (50) angeordnet ist,
- wobei der Balgraum (5) mit einem Fluid (1) befüllt ist,
- wobei zum einen die Außenglocke (30) und der Abrollkolben (50) jeweils über der Höhe des entsprechenden Bauteils zumindest bereichsweise variierende Durchmesser der den Schlauchrollbalg (11) kontaktierenden Wandungen hat und zum anderen beide Enden des Schlauchrollbalgs (11) am Abrollkolben (50) an Abschnitten unterschiedlichen Durchmessers abdichtend befestigt sind und
- wobei der untere Befestigungsabschnitt einen größeren Durchmesser als der obere Befestigungsabschnitt hat,
**dadurch gekennzeichnet,**
- **dass** die Wandungen (56, 57) der Abschnitte unterschiedlichen Durchmessers des Abrollkolbens (50) im Hubbereich zylindrisch ausgebildet sind,
- und **dass** der Balgraum (5) mit einem fahrwerk- und/oder fahrzeugseitig gelagerten Hydrospeicher (70, 44, 62) kommuniziert.

2. Kombiniertes Feder-Dämpfersystem gemäß Anspruch 1, **dadurch gekennzeichnet, daß** der Schlauchrollbalg ein mindestens zweiteiliger Differenzrollbalg (11) ist.

3. Kombiniertes Feder-Dämpfersystem gemäß Anspruch 1, **dadurch gekennzeichnet, daß** die beiden einander zugewandten Enden der beiden Balgteile (12, 13) des montierten Differenzrollbalgs (11) über eine Verbindungsmuffe (14) miteinander verbunden sind.

4. Kombiniertes Feder-Dämpfersystem gemäß Anspruch 3, **dadurch gekennzeichnet, daß** die Verbindungsmuffe (14) eine die Außenglocke (30) durchquerende Arbeitsleitung (76) aufweist.

5. Kombiniertes Feder-Dämpfersystem gemäß Anspruch 1, **dadurch gekennzeichnet, daß** im Fluidstrom zwischen dem Balgraum (5) und dem Hydrospeicher (70, 44, 62) mindestens eine Drosselstelle oder mindestens zwei Drosselrückschlagventile (77, 48, 64) angeordnet sind.

6. Kombiniertes Feder-Dämpfersystem gemäß Anspruch 1, **dadurch gekennzeichnet, daß** das Fluid (1) eine Wasser-Alkohollösung ist.

7. Kombiniertes Feder-Dämpfersystem gemäß Anspruch 1, **dadurch gekennzeichnet, daß** der Balgraum (5) über eine Zuleitung im Fahrbetrieb zur Realisierung eines aktiven Feder-Dämpfersystems mit einer externen Fluidzuführung in Verbindung steht.

8. Kombiniertes Feder-Dämpfersystem zur Abstützung von Radaufhängungen oder Achsen an einem Fahrzeugaufbau mit einem zwischen einer radtragenden oder radführenden Anbindung und einer fahrzeugaufbauseitigen Anbindung angeordneten Schlauchrollbalg (11), der zwischen einer Außenglocke (30) und einem Abrollkolben (50) angeordnet ist,
- wobei der Balgraum (5) mit einem Gas gefüllt ist,
- wobei zum einen die Außenglocke (30) und der Abrollkolben (50) jeweils über der Höhe des entsprechenden Bauteils zumindest bereichsweise variierende Durchmesser der den Schlauchrollbalg (11) kontaktierenden Wandungen hat und zum anderen beide Enden des Schlauchrollbalgs (11) am Abrollkolben (50) an Abschnitten unterschiedlichen Durchmessers abdichtend befestigt sind,
- wobei der untere Befestigungsabschnitt einen größeren Durchmesser als der obere Befestigungsabschnitt hat,
**dadurch gekennzeichnet,**
- **dass** die Wandungen (56, 57) der Abschnitte unterschiedlichen Durchmessers des Abrollkolbens (50) im Hubbereich zylindrisch ausgebildet sind und
- **dass** der Balgraum (5) über in der Wandung der Außenglocke (30) befindliche Rohrstutzen (76,82) mit einem fahrwerk- und/oder fahrzeugseitig gelagerten Speicher (70) und mit einer Druckpumpe regelbar in Verbindung steht.

9. Kombiniertes Feder-Dämpfersystem gemäß Anspruch 8, **dadurch gekennzeichnet,**
- **daß** der Schlauchrollbalg (11) ein aus den beiden Balgteilen (12, 13) gebildeter Differenzrollbalg (11) ist,
- **daß** der Abrollkolben (50) ein Differenzrollkolben ist, der aus einem oberen Abschnitt (51) und einen unteren Abschnitt (55) gebildet ist,
- wobei die beiden Balgteile (12, 13) des Differenzrollbalges (11) und der obere- und untere Abschnitt (51, 55) des Differenzkolbens (50) entgegengesetzt zueinander angeordnet sind.

10. Kombiniertes Feder-Dämpfersystem gemäß Anspruch 8 und 9, **dadurch gekennzeichnet, daß** die beiden Balgteile (12,13) auf Innenflächen (36, 37) des oberen-/unteren Abschnittes (31, 33) der Außenglocke (30) und auf Außenwänden (56, 57) des oberen-/unteren Abschnittes (51, 55) des Abrollkolben (50) abrollen.

11. Kombiniertes Feder-Dämpfersystem gemäß Anspruch 8 bis 10, **dadurch gekennzeichnet, daß** die Außenwände (56, 57) des Abrollkolbens (50) und die Innenflächen (36, 37) der Außenglocke (30) derartig ausgebildet sind, daß die beiden zwischen Abrollkolben (50) und Außenglocke (30) abrollenden Balgteile (12, 13) zueinander unterschiedliche Wirkradien aufweisen.

12. Kombiniertes Feder-Dämpfersystem gemäß Anspruch 8 bis 11, **dadurch gekennzeichnet, daß** der dem einen Balgteil (12) zugeordnete obere Abschnitt (51) des Abrollkolbens (50) - verglichen mit dem des anderen BalgteilsDifferenzrollkolben (13) zugeordneten unteren Abschnitt (55) des Abrollkolbens (50) einen unterschiedlichen (größeren/kleineren) Radius aufweist.

13. Kombiniertes Feder-Dämpfersystem gemäß Anspruch 8 bis 12, **dadurch gekennzeichnet, daß** die beiden den Differenzrollbalg (11) bildenden Balgteile (12, 13) einerseits an dem Abrollkolben (50) mit jeweils einem Spannring/Abrollkolben (58, 59) und andererseits an der Außenglocke (30) mit jeweils einem Spannring/Außenglocke (17,18) und einer Verbindungsmuffe (14) druckdicht befestigt sind.

14. Kombiniertes Feder-Dämpfersystem gemäß Anspruch 8 bis 13, **dadurch gekennzeichnet, daß** der Abrollkolben (50) zur Aufnahme eines Stoßdämpfers (80) hohlzylindrisch ausgebildet ist, wobei das eine Stoßdämpferende ortsfest am unteren Ende des Abrollkolben (88) und das andere Stoßdämpferende (Stoßdämpferstange 81) ortsfest an einer auf der Außenglocke (30) befindlichen Deckplatte (86) befestigt ist.

15. Kombiniertes Feder-Dämpfersystem gemäß Anspruch 8 bis 14, **dadurch gekennzeichnet, daß** der Abrollkolben (50) hohlzylindrisch ausgebildet ist, und als Stoßdämpferrohr Teil eines innenliegenden Stoßdämpfers (80) ist.

## Claims

1. Combined spring/damper system for the support of wheel suspensions or axles on a vehicle body, with a tubular roll bellows located between a link supporting or guiding the wheel and a link on the vehicle body, which is located between an outer bell (30) and a rolling piston (50),
- wherein the bellows chamber (5) is filled with a fluid,
- wherein, on the one hand, the outer bell (30) and the rolling piston (50) have diameters of the walls in contact with the tubular roll bellows (11) which vary at least in some areas over the height of the component in question and, on the other hand, the two ends of the tubular roll bellows (11) are attached to the rolling piston (50) on sections of different diameters, and
- wherein the lower mounting section has a larger diameter than the upper mounting section
**characterised in that**
- the walls (56, 57) of the sections of the rolling piston (50) with different diameters are cylindrical within the stroke range,
- and **in that** the bellows chamber (5) communicates with a hydraulic reservoir (70, 44, 62) mounted on the chassis and/or on the vehicle.

2. Combined spring/damper system according to claim 1, **characterised in that** the tubular roll bellows is a differential roll bellows (11) with at least two parts.

3. Combined spring/damper system according to claim 1, **characterised in that** the two facing ends of the bellows parts (12, 13) of the installed differential roll bellows (11) are connected to one another via a connecting sleeve (14).

4. Combined spring/damper system according to claim 3, **characterised in that** the connecting sleeve (14) incorporates a working line (76) passing through the outer bell (30).

5. Combined spring/damper system according to claim 1, **characterised in that** at least one orifice or at least two orifice check valves (77, 48, 64) is/are located in the fluid flow between the bellows chamber (5) and the hydraulic reservoir (70, 44, 62).

6. Combined spring/damper system according to claim 1, **characterised in that** the fluid (1) is an aqueous alcohol solution.

7. Combined spring/damper system according to claim 1, **characterised in that** the bellows chamber (5) is connected to an external fluid supply via an inlet line for the implementation of an active spring/damper system.

8. Combined spring/damper system for the support of wheel suspensions or axles on a vehicle body, with a tubular roll bellows (11) located between a link supporting or guiding the wheel and a link on the vehicle body, which is located between an outer bell (30) and a rolling piston (50),
- wherein the bellows chamber (5) is filled with a gas,
- wherein, on the one hand, the outer bell (30) and the rolling piston (50) have diameters of the walls in contact with the tubular roll bellows (11) which vary at least in some areas over the height of the component in question and, on the other hand, the two ends of the tubular roll bellows (11) are attached to the rolling piston (50) on sections of different diameters,
- wherein the lower mounting section has a larger diameter than the upper mounting section
**characterised in that**
- the walls (56, 57) of the sections of the rolling piston (50) with different diameters are cylindrical within the stroke range,
- wherein the bellows chamber (5) is controllably connected to a reservoir (70) mounted on the chassis and/or on the vehicle and to a hydraulic pump via pipe connections (76, 82) in the wall of the outer bell (30),

9. Combined spring/damper system according to claim 8, **characterised in that**
- the tubular roll bellows (11) is a differential roll bellows (11) comprising the two bellows parts (12, 13),
- the rolling piston (50) is a differential rolling piston comprising an upper section (51) and a lower section (55),
- the two bellows parts (12, 13) of the differential roll bellows (11) and the upper and lower sections (51, 55) of the differential piston (50) arranged opposite to one another.

10. Combined spring/damper system according to claims 8 and 9, **characterised in that** the two bellows parts (12, 13) roll on internal surfaces (36, 37) of the upper/lower section (31, 33) of the outer bell (30) and on external walls (56, 57) of the upper/lower section (51, 55) of the rolling piston (50).

11. Combined spring/damper system according to any of claims 8 to 10, **characterised in that** the external walls (56, 57) of the rolling piston (50) and the internal surfaces (36, 37) of the outer bell (30) are so designed that the two bellows parts (12, 13) rolling between the rolling piston (50) and the outer bell (30) have different effective radii.

12. Combined spring/damper system according to any of claims 8 to 11, **characterised in that** the upper section (51) of the rolling piston (50), which is assigned to the one bellows part (12), has a different (greater/smaller) radius compared to the lower section (55) of the rolling piston (50), which is assigned to the other bellows part (13).

13. Combined spring/damper system according to any of claims 8 to 12, **characterised in that** the two bellows parts (12, 13) forming the differential roll bellows (11) are pressure-sealed on the one hand to the rolling piston (50) with one clamping ring/rolling piston (58, 59) each and on the other hand to the outer bell (30) with one clamping ring/outer bell (17, 18) and one connecting sleeve (14) each.

14. Combined spring/damper system according to any of claims 8 to 13, **characterised in that** the rolling piston (50) is designed as a hollow cylinder to house a shock absorber (80), one end of the shock absorber being fixed to the lower end of the rolling piston (88), while the other end of the shock absorber (shock absorber rod 81) is fixed to a cover plate (86) on the outer bell (30).

15. Combined spring/damper system according to any of claims 8 to 14, **characterised in that** rolling piston (50) is designed as a hollow cylinder and, as shock absorber tube, forms part of an internal shock absorber (80).

## Revendications

1. Système amortisseur à ressort combiné pour le support de suspensions de roues ou d'essieux dans une carrosserie automobile avec un soufflet en forme de boudin monté entre une attache portant les roues ou guidant les roues et une attache du côté de la carrosserie automobile, qui est disposé entre une cloche extérieure (30) et un piston à roulement (50),
- dans lequel l'espace à soufflet (5) est rempli avec un fluide (1),
- dans lequel, d'une part, la cloche extérieure (30) et le piston à roulement (50) ont chacun des diamètres de parois en contact avec le soufflet en forme de boudin (11) variant au moins par zones sur la hauteur de l'élément de construction correspondant et, d'autre part, les deux extrémités du soufflet en forme de boudin (11) sont fixées de manière étanche sur le piston à roulement (50) sur des tronçons ayant des diamètres différents et
- dans lequel le tronçon de fixation inférieur a un diamètre plus grand que le tronçon de fixation supérieur,
**caractérisé en ce que**
- les parois (56, 57) des tronçons du piston à roulement (50) ayant des diamètres différents sont cylindriques dans la zone de la course,
- et l'espace à soufflet (5) communique avec un accumulateur hydraulique (70, 44, 62) logé du côté du mécanisme de roulement et/ou du côté du véhicule.

2. Système amortisseur à ressort combiné selon la revendication 1, **caractérisé en ce que** le soufflet en forme de boudin est un soufflet à roulements différentiels (11) à au moins deux parties.

3. Système amortisseur à ressort combiné selon la revendication 1, **caractérisé en ce que** les deux extrémités des deux parties du soufflet (12, 13) dirigées l'une vers l'autre du soufflet à roulements différentiels monté (11) sont raccordées l'une à l'autre par un manchon de raccordement (14).

4. Système amortisseur à ressort combiné selon la revendication 3, **caractérisé en ce que** le manchon de raccordement (14) comporte une conduite de travail (76) traversant la cloche extérieure (30).

5. Système amortisseur à ressort combiné selon la revendication 1, **caractérisé en ce qu'**au moins un point d'étranglement ou au moins deux soupapes anti-retour avec étranglement (77, 48, 64) sont disposés dans le courant de fluide entre l'espace à soufflet (5) et l'accumulateur hydraulique (70, 44, 62).

6. Système amortisseur à ressort combiné selon la revendication 1, **caractérisé en ce que** le fluide (1) est une solution d'eau et d'alcool.

7. Système amortisseur à ressort combiné selon la revendication 1, **caractérisé en ce que** l'espace à soufflet (5) communique avec une alimentation de fluide externe par l'intermédiaire d'une conduite d'alimentation pendant la marche pour la réalisation d'un système amortisseur à ressort actif avec une alimentation de fluide externe.

8. Système amortisseur à ressort combiné pour le support de suspensions de roues ou d'essieux dans une carrosserie automobile avec un soufflet en forme de boudin (11) monté entre une attache portant les roues ou guidant les roues et une attache du côté de la carrosserie automobile, qui est disposé entre une cloche extérieure (30) et un piston à roulement (50),
- dans lequel l'espace à soufflet (5) est rempli avec un gaz,
- dans lequel, d'une part, la cloche extérieure (30) et le piston à roulement (50) ont chacun des diamètres de parois en contact avec le soufflet en forme de boudin (11) variant au moins par zones sur la hauteur de l'élément de construction correspondant et, d'autre part, les deux extrémités du soufflet en forme de boudin (11) sont fixées de manière étanche sur le piston à roulement (50) sur des tronçons ayant des diamètres différents,
- dans lequel le tronçon de fixation inférieur a un diamètre plus grand que le tronçon de fixation supérieur,
**caractérisé en ce que**
- les parois (56, 57) des tronçons du piston à roulement (50) ayant des diamètres différents sont cylindriques dans la zone de la course et
- l'espace à soufflet (5) communique de manière réglable avec un accumulateur (70) logé du côté du mécanisme de roulement et/ou du côté du véhicule et avec une pompe sous pression par l'intermédiaire de tubulures (76, 82) se trouvant dans la paroi de la cloche extérieure (30).

9. Système amortisseur à ressort combiné selon la revendication 8, **caractérisé en ce que**
- le soufflet en forme de boudin (11) est un soufflet à roulements différentiels (11) formé par les deux parties de soufflet (12, 13),
- le piston à roulement (50) est un piston à roulement différentiel qui est formé d'un tronçon supérieur (51) et d'un tronçon inférieur (55),
- dans lequel les deux parties de soufflet (12, 13) du soufflet à roulements différentiels (11) et le tronçon supérieur (51) et le tronçon inférieur (55) du piston différentiel (50) sont montés en sens inverse les uns par rapport aux autres.

10. Système amortisseur à ressort combiné selon les revendications 8 et 9, **caractérisé en ce que** les deux parties de soufflet (12, 13) roulent sur des surfaces intérieures (36, 37) du tronçon supérieur /du tronçon inférieur (31, 33) de la cloche extérieure (30) et sur des parois extérieures (56, 57) du tronçon supérieur /du tronçon inférieur (51, 55) du piston à roulement (50).

11. Système amortisseur à ressort combiné selon les revendications 8 à 10, **caractérisé en ce que** les parois extérieures (56, 57) du piston à roulement (50) et les surfaces intérieures (36, 37) de la cloche extérieure (30) sont configurées de manière à ce que les deux parties de soufflet (12, 13) roulant entre le piston à roulement (50) et la cloche extérieure (30) présentent des rayons utiles différents l'une par rapport à l'autre.

12. Système amortisseur à ressort combiné selon les revendications 8 à 11, **caractérisé en ce que** le tronçon supérieur (51) du piston à roulement (50) associé à une partie de soufflet (12) - comparé avec le tronçon inférieur (55) associé à l'autre partie de soufflet (13) du piston à roulement (50) présente un rayon différent (plus grand/plus petit).

13. Système amortisseur à ressort combiné selon les revendications 8 à 12, **caractérisé en ce que** les deux parties de soufflet (12, 13) formant le soufflet à roulements différentiels (11) sont fixées de manière étanche à la pression, d'une part, sur le piston à roulement (50) avec chacun un collier tendeur/un piston à roulement (58, 59) et, d'autre part, sur la cloche extérieur (30) avec chacun un collier tendeur/une cloche extérieure (17, 18) et un manchon de raccordement (14).

14. Système amortisseur à ressort combiné selon les revendications 8 à 13, **caractérisé en ce que** le piston à roulement (50) a une forme de cylindre creux pour le logement d'un amortisseur (80), une extrémité de l'amortisseur étant fixée de manière stationnaire à l'extrémité inférieure du piston à roulement (88) et l'autre extrémité de l'amortisseur (tige de l'amortisseur 81) étant fixée de manière stationnaire à une plaque de recouvrement (86) se trouvant sur la cloche extérieure (30).

15. Système amortisseur à ressort combiné selon les revendications 8 à 14, **caractérisé en ce que** le piston à roulement (50) a une forme de cylindre creux et, sous forme de tube d'amortisseur, fait partie d'un amortisseur (80) se trouvant à l'intérieur.
